# EUROPEAN PATENT SPECIFICATION

(11) **EP 2 604 023 B1**
(45) Date of publication and mention of the grant of the patent: **06.03.2019**
(21) Application number: 11816633.9
(22) Date of filing: 11.08.2011
(51) Int. Cl.: H04M 1/23, G06F 3/023, G06F 3/0488

(54) **METHOD AND DEVICE FOR INPUTTING CHARACTERS**
VERFAHREN UND VORRICHTUNG ZUM EINGEBEN VON ZEICHEN
PROCÉDÉ ET DISPOSITIF D'ENTRÉE DE CARACTÈRES

(30) Priority: 10.08.2011 KR 20110079866; 13.08.2010 KR 20100078327
(43) Date of publication of application: 19.06.2013
(73) Proprietor: Samsung Electronics Co., Ltd., Gyeonggi-do 443-742 (KR)
(72) Inventor: PARK, Se-Hwan, Suwon-si Gyeonggi-do 443-751 (KR); KIM, Ji-Hoon, Seoul 156-772 (KR); PARK, Sung-Wook, Goyang-si Gyeonggi-do 412-748 (KR); LEE, Ji-Hoon, Suwon-si Gyeonggi-do 443-848 (KR)
(74) Representative: HGF Limited
(86) International application number: PCT/KR2011/005918
(87) International publication number: WO 2012/021017

(56) References cited:
- EP-A2- 1 513 053
- WO-A1-2009/074278
- KR-A- 20050 102 829
- KR-A- 20080 015 578
- KR-A- 20100 024 471
- KR-A- 20100 027 329

## Description

### Technical Field

The present invention relates generally to a method and a device for inputting characters, and more particularly, to a method and a device for inputting characters, by which a user can rapidly input the characters through multi-input using both hands.

### Background Art

In modern society, portable terminals are well-known as devices capable of inputting characters. The portable terminal has become a necessity of life due to simplicity and portability, and is commonly used. Such a portable terminal provides various functions in addition to the typical call function, such as text message transmission.

However, since the size of the portable terminal must remain small, the conventional method for inputting characters in the portable terminal is complicated.

When a user inputs characters in the portable terminal having a touch screen, the user touches keys included in an input unit of the touch screen unit by using a finger or a pointer, to input characters and numbers.

The input unit used for inputting the characters employs a reduced QWERTY-type keyboard similar to that of a typical computer terminal or an input scheme, which uses a reduced number of keys while input of a character is achieved through repeated input of a key.

Further, the MOAKEY input scheme using the drag input property has been employed in the touch screen unit.

WO-2009/074278-A1 discloses a device and method for inputting combined characters, wherein a device has touch input means which comprises a plurality of key areas.

EP-1513053-A2 discloses a character recognition apparatus and method in a terminal having a touch screen, wherein a user interface is divided into a plurality of character input areas displayed on the touch screen.

### Disclosure of Invention

### Technical Problem

However, the aforementioned conventional scheme uses a single touch input scheme using one hand, thereby making it slower than the character input using both hands, and is also detrimentally affected by the increased number of touch times when inputting certain diphthongs ( 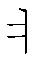 , 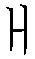 , 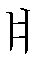 , 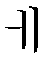 , 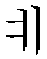 , 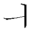 , 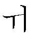 , 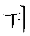 , 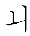 , 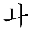 , 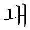 , and 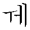 ).

### Solution to Problem

Accordingly, certain embodiments of the present invention have been made to solve the above stated problems occurring in the prior art, and certain embodiments of the present invention provide a method and a device for inputting characters, by which a user can rapidly input characters through multi-input using both hands.

In accordance with an aspect of the present invention, there is provided a method for inputting characters, the method comprising the steps of: detecting an input of a key corresponding to a consonant arranged in a first region of a touch screen among multiple keys arranged on the touch screen; detecting a touch or a drag in a second region of the touch screen while the input of the key is maintained; switching, when detecting the touch or the drag in the second region of the touch screen while the input of the key is maintained, to a multi-input mode for inputting a vowel, wherein the switching to the multi-input mode comprises: activating a region of the touch screen, which is different from the first region corresponding to the detected input of the key, as a virtual area for inputting a vowel, and dividing the virtual area into multiple areas based on the first region corresponding to the detected input of the key; identifying a region corresponding to the second area where the touch or the drag is detected among the multiple areas; combining a vowel corresponding to the touch or the drag with the consonant, by identifying the vowel corresponding to the touch or the drag based on the identified region; and displaying a combined character of the vowel and the consonant.

In accordance with another aspect of the present invention, there is provided a device for inputting characters. The device comprises: a touch screen unit in which multiple keys are activated as a virtual area for inputting a vowel in a multi-input mode; and a controller arranged to: detect an input of a key corresponding to a consonant arranged in a first region of a touch screen among multiple keys arranged on the touch screen; detect a touch or a drag in a second region of the touch screen while the input of the key is maintained; switch to the multi-input mode when detecting the touch or the drag in a second region of the touch screen unit while the input of the key is maintained, wherein the switching to the multi-input mode comprises: activating a region of the touch screen, which is different from the first region corresponding to the detected input of the key, as a virtual area for inputting a vowel, and dividing the virtual area into multiple areas based on the first region corresponding to the detected input of the key; identify a region corresponding to the second area where the touch or the drag is detected among the multiple areas; combine a vowel corresponding to the touch or the drag with the consonant by identifying the vowel corresponding to the touch or the drag based on the identified region; and display a combined character of the vowel and the consonant.

### Advantageous Effects of Invention

The present invention provides the method and the device for inputting characters, which allows the multi-input using both hands, to enable rapid input of the characters in comparison with the scheme of inputting the characters with one hand. Further, in inputting the diphthong, the number of touch times is reduced through performing the touch or drag based on the position of the key in which the consonant is arranged, thereby effectively achieving rapid input of the characters.

### Brief Description of Drawings

The above and other aspects, features and advantages of the present invention will be more apparent from the following detailed description taken in conjunction with the accompanying drawings, in which:
FIG. 1 illustrates the construction of a portable terminal according to the present invention;
FIGs. 2a to 2d illustrate an operation of inputting characters in a portable terminal according to the present invention;
FIGs. 3a to 3b illustrate an operation of inputting characters in a portable terminal according to the present invention;
FIGs. 4a and 4b are flowcharts illustrating an operation of inputting characters in a portable terminal according to another embodiment of the present invention; and
FIG. 5 is a view illustrating an operation of inputting characters in a portable terminal according to another embodiment of the present invention.

### Best Mode for Carrying out the Invention

Hereinafter, embodiments of the present invention will be described with reference to the accompanying drawings. In the following description, the same elements will be designated by the same reference numerals although they are shown in different drawings. Further, a detailed description of known functions and configurations incorporated herein will be omitted for the sake of clarity and conciseness.

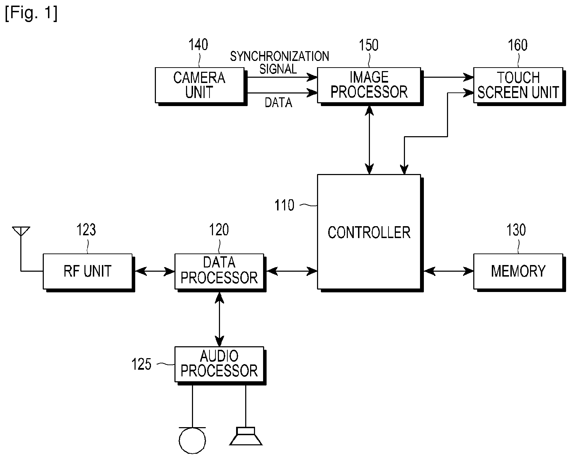

FIG. 1 illustrates the construction of a portable terminal according to the present invention.

Referring to FIG. 1, a Radio Frequency (RF) unit 123 performs a wireless communication function of a portable terminal. The RF unit 123 includes an RF transmitter (not shown) for up-converting and amplifying a frequency of a transmitted signal and an RF receiver (not shown) for low-noise amplifying a received signal and downconverting the frequency. A data processor 120 includes a transmitter (not shown) for encoding and modifying the transmitted signal and a receiver (not shown) for demodulating and decoding the received signal. That is, the data processor 120 includes a modem (not shown) and a codec(not shown). Here, the codec includes a data codec for processing packet data, and an audio codec for processing an audio signal, such as voice. An audio processor 125 reproduces a received audio signal output from the audio codec of the data processor 120 or transmits a transmitted audio signal generated from a microphone to the audio codec of the data processor 120.

A memory 130 may include a program memory (not shown) and a data memory(not shown). The program memory may store programs for controlling a general operation of the portable terminal, and programs for switching to a multi-input mode, in which a touch screen unit is activated as a virtual area for inputting vowels when a touch or a drag is generated while the input of a key in which a consonant is arranged in the touch screen unit is maintained. Further, the data memory performs a function of temporarily storing data generated during the execution of the programs.

A controller 110 performs a function of a general operation of the portable terminal.

When a touch or a drag is generated in the touch screen unit 160 while the input of a key in which a consonant is arranged is maintained, the controller 110 makes a control for switching to the multi-input mode in which the touch screen unit 160 is activated as the virtual area for the input of a vowel.

Further, the controller 110 makes a control so that a vowel input through the touch or drag in the virtual area in the multi-input mode is combined with the consonant and a combined character is displayed.

In the multi-input mode, a user can input characters by using both hands. One hand maintains the input of the key, in which the consonant is arranged, and the other hand generates a touch or drag for inputting a vowel in the touch screen unit 160 activated as the virtual area, so that the consonant and the vowel are combined and the character is input.

The controller 110 may control so that the virtual area is divided into multiple regions based on the position of the key in which the input consonant is arranged, and the multiple areas is visually divided and displayed according to the user's selection.

Under the control of the controller 110, a vowel corresponding to an input region among the multiple regions of the virtual area can be input by the touch for inputting the vowel on the touch screen unit 160 activated as the virtual area.

Also under the control of the controller 110, a vowel according to a corresponding input region among the multiple regions of the virtual area and a shape of a drag can be input by the drag for inputting the vowel on the touch screen unit 160 activated as the virtual area.

Further, under the control of the controller 110, a vowel can be input according to a corresponding input region in which the touch is input and a corresponding input region in which the drag is input, and a shape of a drag in the touch screen unit 160 activated as the virtual area.

The shape of the drag includes a straight drag (hereinafter 'straight drag') and a half-ellipsoidal drag. The straight drag includes upward/downward/leftward/rightward straight drags. The half-ellipsoidal drag includes a half-ellipsoidal drag in the left direction and a half-ellipsoidal drag in the right direction, both of which may be performed in a clockwise and counterclockwise direction.

Under the control of the controller 110, data such as a character, a number, and a special sign, arranged on the multiple keys are transparently displayed and the type of corresponding vowels which can be input through a touch or drag on each of the multiple regions included in the virtual area is displayed in the touch screen unit 160.

When the vowel is input in the multi-input mode, the controller 110 controls such that the input vowel is displayed in the form of a text balloon in an upper side of the key in which the consonant is arranged so that the user can identify the input vowel.

When a single input mode is switched to the multi-input mode in the portable terminal, the controller 110 controls such that the switching to the multi-input mode is notified through at least one of an indicator, a haptic effect, an alarming sound, and a change of a background image, which are discriminated from those of the single input mode.

When the multi-input mode is terminated and it is switched to the single input mode in the portable terminal, the controller 110 controls such that the termination of the multi-input mode is notified through at least one of an indicator, a haptic effect, an alarming sound, and a change of a background image, which are discriminated from those of the multi- input mode.

The termination of the multi-input mode is generated when the input of the key, in which the consonant is arranged, is not maintained, and the portable terminal switches the multi-input mode to the single input mode according to the termination of the multi-input mode.

When the virtual area is divided into the multiple regions, i.e. a right region and a lower region, based on the key, in which the consonant is arranged and of which the input is maintained, when a touch is generated in the right region, the controller 110 controls such that the vowel ' 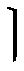 ' is combined with the consonant and a combined character is displayed.

When the straight drag in the right direction is generated in the right region, the controller 110 controls such that the vowel ' 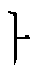 ' is combined with the consonant and a combined character is displayed.

When the straight drag in the left direction is generated in the right region, the controller 110 controls such that the vowel ' 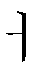 ' is combined with the consonant and a combined character is displayed.

When the straight drag in the right direction is continuously generated two times in the right region, the controller 110 controls such that the vowel ' 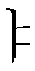 ' is combined with the consonant and a combined character is displayed.

When the straight drag in the left direction is continuously generated two times in the right region, the controller 110 controls such that the vowel ' 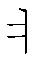 ' is combined with the consonant and a combined character is displayed.

When the half-ellipsoidal drag in the left direction is generated in the right region, the controller 110 controls such that the vowel ' 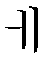 ' is combined with the consonant and a combined character is displayed.

When the half-ellipsoidal drag in the right direction is generated in the right region, the controller 110 controls such that the vowel ' 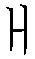 ' is combined with the consonant and a combined character is displayed.

When the straight drag in the left direction is continuously generated two times and then a touch is generated in the right region, the controller 110 controls such that the vowel ' 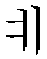 ' is combined with the consonant and a combined character is displayed.

When the straight drag in the right direction is continuously generated two times and then a touch is generated in the right region, the controller 110 controls such that the vowel ' 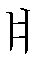 ' is combined with the consonant and a combined character is displayed.

When a touch is generated in the lower region, the controller 110 controls such that the vowel ' 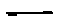 ' is combined with the consonant and a combined character is displayed.

When the straight drag in a downward direction is generated in the lower region, the controller 110 controls such that the vowel ' 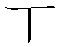 ' is combined with the consonant and a combined character is displayed.

When the straight drag in an upward direction is generated in the lower region, the controller 110 controls such that the vowel ' 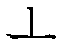 ' is combined with the consonant and a combined character is displayed.

When the straight drag in a downward direction is continuously generated two times in the lower region, the controller 110 controls such that the vowel ' 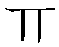 ' is combined with the consonant and a combined character is displayed.

When the straight drag in an upward direction is continuously generated two times in the lower region, the controller 110 controls such that the vowel ' 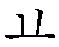 ' is combined with the consonant and a combined character is displayed.

When a touch is generated in the lower region and then a touch is generated in the right region, the controller 110 controls such that the vowel ' 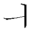 ' is combined with the consonant and a combined character is displayed.

When the straight drag in a downward direction is generated in the lower region and then the straight drag in the left direction is generated in the right region, the controller 110 controls such that the vowel ' 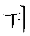 ' is combined with the consonant and a combined character is displayed.

When the straight drag in an upward direction is generated in the lower region and then the half-ellipsoidal drag in the right direction is generated in the right region, the controller 110 controls such that the vowel ' 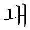 ' is combined with the consonant and a combined character is displayed.

When the straight drag in an upward direction is generated in the lower region and then the straight drag in the right direction is generated in the right region, the controller 110 controls such that the vowel ' 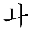 ' is combined with the consonant and a combined character is displayed.

When the straight drag in a downward direction is generated in the lower region and then a touch is generated in the right region, the controller 110 controls such that the vowel ' 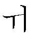 ' is combined with the consonant and a combined character is displayed.

When the straight drag in an upward direction is generated in the lower region and then a touch is generated in the right region, the controller 110 controls such that the vowel ' 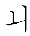 ' is combined with the consonant and a combined character is displayed.

When the straight drag in a downward direction is generated in the lower region and then the half-ellipsoidal drag in the left direction is generated in the right region, the controller 110 controls such that the vowel ' 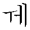 ' is combined with the consonant and a combined character is displayed.

The controller 110 activates all remaining regions other than the key in which the input consonant is arranged as the virtual area for inputting the vowel according to the embodiment of the present invention. Further, the controller 110 controls such that a corresponding vowel is input and displayed next to the input consonant through a touch or a direction of a drag input on the virtual area.

Further, the controller 110 vaguely displays data such as a character, a number, and a special sign, arranged on the multiple keys included in the touch screen unit 160, which is activated as the virtual area, and displays the type of corresponding vowels which can be input through a touch or a direction of a drag on the virtual area according to the embodiment of the present invention.

When a straight drag in a left direction is generated, the controller 110 controls such that a vowel 'a' is input and displayed next to the consonant according to the embodiment of the present invention.

When a straight drag in a right direction is generated, the controller 110 controls such that a vowel 'e' is input and displayed next to the consonant according to the embodiment of the present invention.

When a touch is generated, the controller 110 controls such that a vowel 'i' is input and displayed next to the consonant according to the embodiment of the present invention.

When a straight drag in an upward direction is generated, the controller 110 controls such that a vowel 'o' is input and displayed next to the consonant according to the embodiment of the present invention.

When a straight drag in a downward direction is generated, the controller 110 controls such that a vowel 'u' is input and displayed next to the consonant according to the embodiment of the present invention.

A camera unit 140 photographs image data, and includes a camera sensor (not shown) for converting a photographed optical signal to an electric signal and a signal processor (not shown) for converting an analogue image signal photographed by the camera sensor to digital data. It is assumed that the camera sensor is a Charge-Coupled Device (CCD) sensor or a Complementary Metal Oxide Sensor (CMOS) sensor, and the signal processor can be implemented in a Digital Signal Processor (DSP). The camera sensor can be integrally or separately formed with the signal processor.

An image processor 150 performs an Image Signal Processing (ISP) for displaying an image signal output from the camera unit 140 on the touch screen unit 160. The ISP performs a function, such as a gamma correction, an interpolation, a spatial change, an image effect, an image scale, Auto White Balance (AWB), Auto Exposure (AE), and Auto Focus (AF). Therefore, the image processor 150 processes an image signal output from the camera unit 140 frame by frame, and outputs the frame image data in accordance with a characteristic and a size of the touch screen unit 160. The image processor unit 150 includes an image codec (not shown), and compresses the frame image data displayed on the touch screen unit 160 in a preset scheme or restores the compressed frame image data to the original frame image data. The image codec may include, for example, a Joint Photographic Experts Group (JPEG) codec, an Motion Pictures Experts Group (MPEG)4 codec, or a Wavelet codec. The image processor 150 is assumed to have an On Screen Display (OSD) function and outputs OSD data in accordance with a screen size displayed under the control of the controller 110.

The touch screen unit 160 includes a display unit (not shown) and an input unit (not shown). The display unit displays an image signal output from the image processor 150 on a screen and displays user data output from the controller 110. The input unit includes the keys for inputting number and character information and function keys for setting various functions.

When a touch or drag is generated in the touch screen unit 160 while the input of the key, in which a p consonant is arranged, among the keys included in the touch screen unit 160 is maintained, the multiple keys are activated through the virtual area for inputting a vowel. The virtual area may include not only the input unit but also the display unit in the touch screen unit 160.

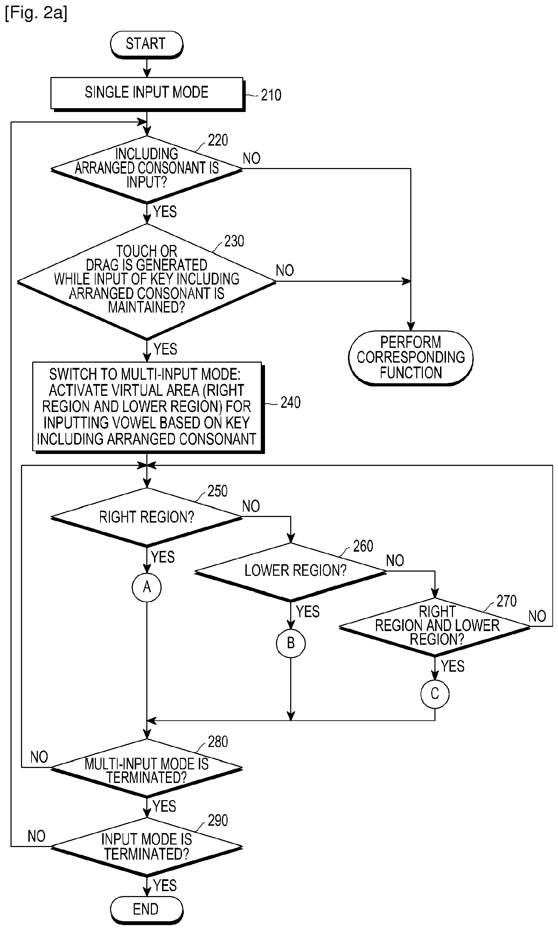

FIGs. 2a to 2d illustrate the operation of inputting characters in the portable terminal according to the present invention. An example of an operation of inputting Korean characters will be described in the embodiment of the present invention, and the input unit of the touch screen unit for inputting characters includes keys in which the Korean consonants are arranged.

FIGs. 2a to 2d will be described with reference to FIG. 1 in detail.

Referring to FIG. 2a, when a key, in which a consonant is arranged, among the multiple keys included in the input unit of the touch screen unit 160 is input in the single input mode of the portable terminal in step 210, the controller 110 detects the input of the key and displays the consonant arranged in the input key on the display unit in step 220.

However, when a touch or drag is generated in the touch screen unit 160 during the maintenance of the input of the key in which the consonant is arranged, the controller 110 detects the generation of the touch or drag in step 230 and processes step 240 for switching the single input mode to the multi-input mode of the portable terminal.

Specifically, in step 240, the switching from the single input mode to the multi-input mode is notified to the user by the controller 110 through at least one of an indicator such as an icon, a haptic effect, an alarming sound, and a change of a background image of the input mode, which are discriminated from those of the single input mode.

The touch screen unit 160 is activated by the controller 110 in step 240 as the virtual area for inputting a vowel, and the virtual area is divided into the multiple regions based on the position of the key in which the consonant input in step 220 is arranged.

Further, in step 240, the controller 110 may visually display the virtual area divided into the multiple regions in accordance with the selection of the user.

The controller 110 vaguely or transparently displays data such as a character, a number, and a special sign, arranged on the multiple keys included in the touch screen unit 160, which is activated as the virtual area, and displays the type of corresponding vowels which can be input through a touch or drag on each of the multiple regions divided from the virtual area.

The division of the virtual area into the right region and the lower region is exemplified for description. However, the virtual area may be divided into the left region and the lower region according to user convenience, and in this regard, the left region may perform the identical function of the input of a vowel through a touch and/or drag in the right region.

In step 240, when the touch or drag is generated in the right region, the controller 110 detects the generation of the touch or drag and determines which of the touch and the drag is generated in step 250.

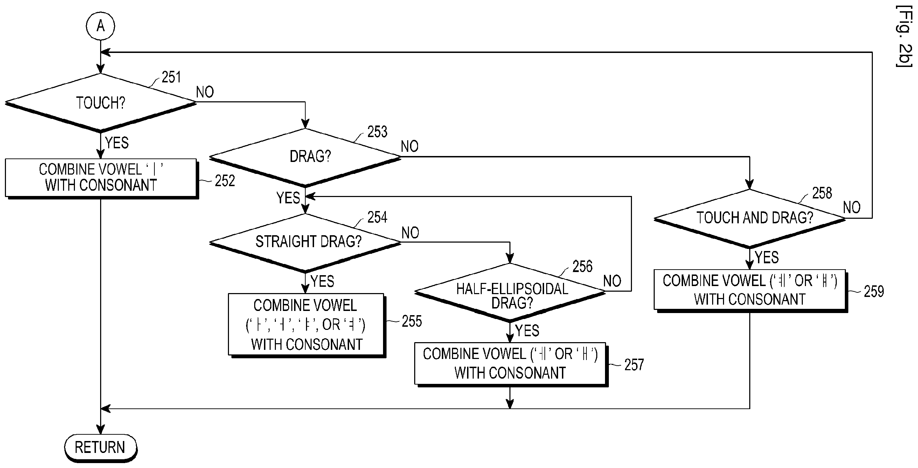

Referring to FIG. 2b, when a touch is generated in the right region, the controller 110 detects the generation of the touch in step 251, and combines the vowel ' 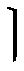 ' with the consonant input in step 220 and processes step 252 of displaying the combined character on the display unit of the touch screen unit 160.

When the drag is generated in the right region, the controller 110 detects the generation of the drag and determines the type of the generated drag in step 253.

When the straight drag is generated in the right region, the controller 110 detects the generation of the straight drag in step 254 and processes step 255, in which the controller 110 combines the vowel ' 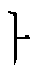 ' with the consonant and displays a combined character on the display unit of the touch screen unit 160. The following is also performed in step 255 by the controller 110.

Specifically, when the straight drag in the left direction is generated in the right region, the controller 110 detects such a straight drag and combines the vowel ' 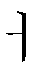 ' with the consonant and displays a combined character on the display unit of the touch screen unit 160.

When the straight drag in the right direction is continuously generated twice in the right region, the controller 110 detects such a straight drag and combines the vowel ' 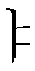 ' with the consonant and displays a combined character on the display unit of the touch screen unit 160.

When the straight drag in the left direction is continuously generated two times in the right region, the controller 110 detects such a straight drag and combines the vowel ' 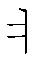 ' with the consonant and displays a combined character on the display unit of the touch screen unit 160.

When the half-ellipsoidal drag is generated in the right region, the controller 110 detects such a half-ellipsoidal drag in step 256 and processes step 257, in which the controller 110 combines the vowel ' 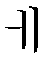 ' with the consonant and displays a combined character on the display unit of the touch screen unit 160.

Further, in step 257, when the half-ellipsoidal drag in the right direction is generated in the right region, the controller 110 detects such a half-ellipsoidal drag and combines the vowel ' 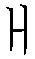 ' with the consonant and displays a combined character on the display unit of the touch screen unit 160.

When both the touch and the drag are generated in the right region, the controller 110 detects the touch and the drag in step 258 and processes step 259.

In step 259, when the straight drag in the left direction is generated twice and then a touch is generated in the right region, the controller 110 detects the generation of the drags and the touch, and combines the vowel ' 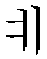 ' with the consonant and displays a combined character on the display unit of the touch screen unit 160.

Further, in step 259, when the straight drag in the right direction is generated twice in the right region and then the touch is generated, the controller 110 detects the generation of the drags and the touch, and combines the vowel ' 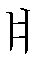 ' with the consonant and displays a combined character on the display unit of the touch screen unit 160.

As described above, when the vowel is input through the touch and/or drag on the right region, the controller 110 displays the corresponding vowel in a form of a text balloon in an upper side of the key, in which the consonant is arranged and of which the input is maintained, to enable the user to identify the input vowel.

The half-ellipsoidal drag in the left direction or the half-ellipsoidal drag in the right direction may be performed in a clockwise direction or in a counterclockwise direction.

When the touch or drag is generated in the lower region in step 240 of FIG. 2a, the controller 110 detects the generation of the touch or the drag and determines which of the touch and the drag is generated in the lower region in step 260.

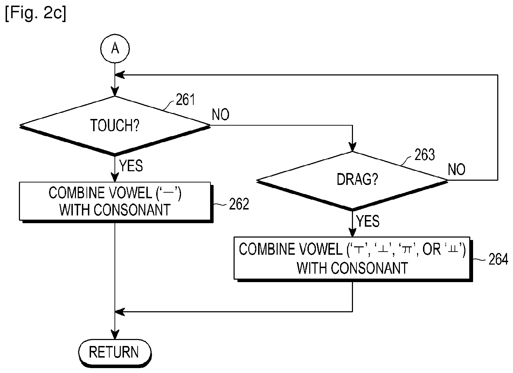

Referring to FIG. 2c, when a touch is generated in the lower region, the controller 110 detects the generation of the touch, and combines the vowel ' 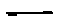 ' with the consonant input in step 220 and displays a combined character on the display unit of the touch screen unit 160.

When the drag is generated in the lower region, the controller 110 detects the generation of the drag in step 263 and processes step 264, in which the controller 110 combines the vowel ' 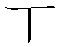 ' with the consonant and displays a combined character on the display unit of the touch screen unit 160.

Further, in step 264, when the straight drag in an upward direction is generated in the lower region, the controller 110 detects such a straight drag, and combines the vowel ' 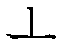 ' with the consonant and displays a combined character on the display unit of the touch screen unit 160.

When the straight drag in a downward direction is generated twice in the lower region, the controller 110 detects the straight drags, and combines the vowel ' 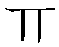 ' with the consonant and displays a combined character on the display unit of the touch screen unit 160.

When the straight drag in an upward direction is generated twice in the lower region, the controller 110 detects the straight drags, and combines the vowel ' 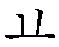 ' with the consonant and displays a combined character on the display unit of the touch screen unit 160.

As described above, when the vowel is input through the touch and/or drag in the right region, the controller 110 displays the corresponding vowel in a form of a text balloon in an upper side of the key, in which the consonant is arranged and of which the input is maintained, to enable the user to identify the input vowel.

When the touch or drag is generated in the right region and the lower region in step 240 of FIG. 2a, the controller 110 detects the generation of the touch or the drag and determines which of the touch and the drag is generated in step 270.

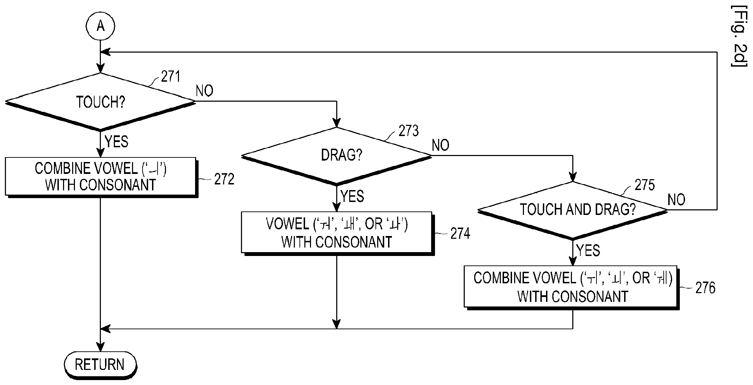

Referring to FIG. 2d, when a touch is generated in the right region and the lower region, the controller 110 detects the generation of the touch in step 271 and processes step 272, in which the controller 110 combines the vowel ' 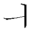 ' with the consonant and displays a combined character on the display unit of the touch screen unit 160.

In this regard, it is possible to input the vowel regardless of an order of the corresponding regions in which the touch is generated.

Otherwise, when the drag is generated in the right region and the lower region, the controller 110 detects the drags in step 273 and processes step 274.

In step 274, when the straight drag in a downward direction is generated in the lower region and then the straight drag in the left direction is generated in the right region, the controller 110 detects the straight drags, and combines the vowel ' 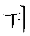 ' with the consonant and displays a combined character on the display unit of the touch screen unit 160.

Otherwise, in step 274, when the straight drag in an upward direction is generated in the lower region and then the half-ellipsoidal drag in the right direction is generated in the right region, the controller 110 detects the drags, and combines the vowel ' 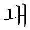 ' with the consonant and displays a combined character on the display unit of the touch screen unit 160.

Further, in step 274, when the straight drag in an upward direction is generated in the lower region and then the straight drag in the right direction is generated in the right region, the controller 110 detects the straight drags, and combines the vowel ' 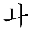 ' with the consonant and displays a combined character on the display unit of the touch screen unit 160.

As described above, when the vowel is input through the drag on the corresponding region, it is possible to input the vowels regardless of an order of the corresponding regions in which the drag is generated.

Otherwise, when the touch and the drag are generated in the right region and the lower region, the controller 110 detects the touch and the drag in step 275 and processes step 276.

In step 276, when the straight drag in a downward direction is generated in the lower region and then a touch is generated in the right region, the controller 110 detects the drag and the touch, and combines the vowel ' 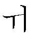 ' with the consonant and displays a combined character on the display unit of the touch screen unit 160.

When the straight drag in an upward direction is generated in the lower region and then a touch is generated in the right region, the controller 110 detects the drag and the touch, and combines the vowel ' 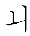 ' with the consonant and displays a combined character on the display unit of the touch screen unit 160.

When the straight drag in a downward direction is generated in the lower region and then the half-ellipsoidal drag in the left direction is generated in the right region, the controller 110 detects the drags, and combines the vowel ' 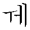 ' with the consonant and displays a combined character on the display unit of the touch screen unit 160.

The half-ellipsoidal drag in the left direction and the half-ellipsoidal drag in the right direction may be performed in a clockwise direction or a counterclockwise direction.

When the vowel is input through the touch and the drag on the corresponding region, it is possible to input the vowels regardless of an order of the touch and the drag generated in the corresponding region and an order of the corresponding regions in which the touch and the drag are generated.

When the vowel is input through the touch and the drag on the right region and the lower region, the controller 110 displays the corresponding vowel in a form of a text balloon in an upper side of the key, in which the consonant is arranged and of which the input is maintained, to enable the user to identify the input vowel.

In FIG. 2a, when the input of the key, in which the consonant is arranged and of which the input is maintained, is terminated during the execution of the multi-input mode, the controller 110 detects the termination of the input of the key, terminates the multi-input mode, and switches the multi-input mode to the single input mode in step 280.

In the switched single input mode, it is possible to add a final sound (consonant) to the character formed by the combination of an initial sound (consonant) and a middle sound (vowel) to input the character.

When the controller 110 determines that the input mode is terminated, the controller 110 detects the termination of the input mode and terminates the input mode in step 290.

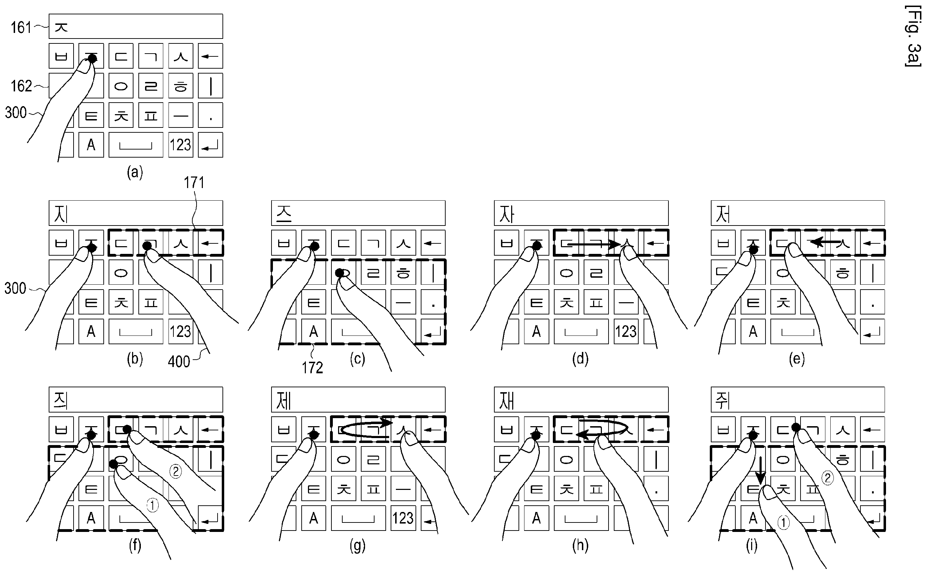

FIGs. 3a to 3b illustrate the operation of inputting the character shown in FIG. 2a to 2d. FIGs. 3a to 3b describe an example of the clockwise directional half-ellipsoidal drag in the left direction and the clockwise directional half-ellipsoidal drag in the right direction.

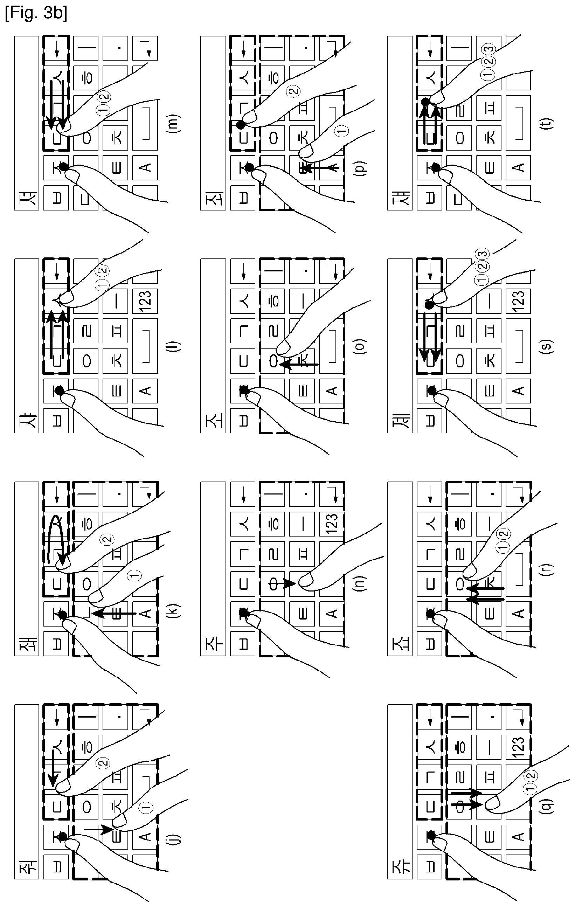

Further, FIGs. 3a to 3b illustrate an example in which the virtual area in the multi-input mode is divided into the right region and the lower region. Throughout FIGs. 3a and 3b, unless it is stated otherwise, the finger on the left of each figure is the one finger 300, and the finger on the right of each figure is the another finger 400.

In FIG. 3a(a), when the user inputs the key in which the consonant ' 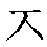 ' is arranged on the input unit 162 of the touch screen unit 160 by using one finger 300, the input consonant ' 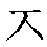 ' is displayed on the display unit 161.

In FIG. 3a(b), in the multi-input mode, when the user touches a right region 171 with another finger 400 while maintaining the input of the key in which the consonant ' 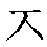 ' is arranged with the one finger 300, the character ' 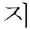 ' is displayed on the display unit 161.

In FIG. 3a(c), in the multi-input mode, when the user touches a lower region 172 with another finger 400 while maintaining the input of the key in which the consonant ' 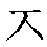 ' is arranged with the one finger 300, the character ' 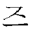 ' is displayed on the display unit 161.

In FIG. 3a(d), in the multi-input mode, when the user performs a drag in the right direction in the right region 171 with another finger 400 while maintaining the input of the key in which the consonant ' 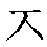 ' is arranged with the one finger 300, the character ' 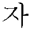 ' is displayed on the display unit 161.

In FIG. 3a(e), in the multi-input mode, when the user performs a drag in the left direction in the right region 171 with another finger 400 while maintaining the input of the key in which the consonant ' 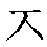 ' is arranged with the one finger 300, the character ' 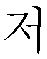 ' is displayed on the display unit 161.

In FIG. 3a(f), in the multi-input mode, when the user first touches (1) the lower region 172 and then touches (2) the right region 171 by using another finger 400 while maintaining the input of the key in which the consonant ' 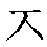 ' is arranged with the one finger 300, the character ' 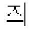 ' is displayed on the display unit 161.

In FIG. 3a(g), when the user performs a half-ellipsoidal drag in the left direction in the right region 171 by using another finger 400 while maintaining the input of the key in which the consonant ' is arranged with the one finger 300, the character ' 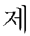 ' is displayed on the display unit 161.

In FIG. 3a(h), in the multi-input mode, when the user performs a half-ellipsoidal drag in the right direction in the right region 171 by using another finger 400 while maintaining the input of the key in which the consonant ' 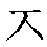 ' is arranged with the one finger 300, the character ' 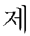 ' is displayed on the display unit 161.

In FIG. 3a(i), in the multi-input mode, when the user first performs a drag (1) in a downward direction in the lower region 172 and then touches (2) the right region 171 by using another finger 400 while maintaining the input of the key in which the consonant ' 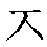 ' is arranged with the one finger 300, the character ' 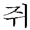 ' is displayed on the display unit 161.

In FIG. 3b(j), in the multi-input mode, when the user first performs a drag (1) in a downward direction in the lower region 172 and then performs a drag (2) in the left direction in the right region 171 by using another finger 400 while maintaining the input of the key in which the consonant ' 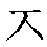 ' is arranged with the one finger 300, the character ' 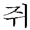 ' is displayed on the display unit 161.

In FIG. 3b(k), in the multi-input mode, when the user first performs a drag (1) in an upward direction in the lower region 172 and then performs a half-ellipsoidal drag (2) in the right direction in the right region 171 by using another finger 400 while maintaining the input of the key in which the consonant ' 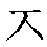 ' is arranged with the one finger 300, the character ' 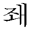 ' is displayed on the display unit 161.

In FIG. 3b(1), in the multi-input mode, when the user performs a drag twice (1), (2) in the right direction in the right region 171 by using another finger 400 while maintaining the input of the key in which the consonant ' 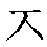 ' is arranged with the one finger 300, the character ' 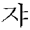 ' is displayed on the display unit 161.

In FIG. 3b(m), in the multi-input mode, when the user performs a drag twice (1), (2) in the left direction in the right region 171 by using another finger 400 while maintaining the input of the key in which the consonant ' 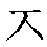 ' is arranged with the one finger 300, the character ' 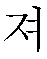 ' is displayed on the display unit 161.

In FIG. 3b(n), in the multi-input mode, when the user performs a drag in a downward direction in the lower region 172 by using another finger 400 while maintaining the input of the key in which the consonant ' 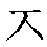 ' is arranged with the one finger 300, the character ' 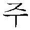 ' is displayed on the display unit 161.

In FIG. 3b(o), in the multi-input mode, when the user performs a drag in an upward direction in the lower region 172 by using another finger 400 while maintaining the input of the key in which the consonant ' 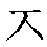 ' is arranged with the one finger 300, the character ' 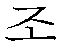 ' is displayed on the display unit 161.

In FIG. 3b(p), in the multi-input mode, when the user first performs a drag in an upward direction in the lower region 172 and then touches the right region 171 by using another finger 400 while maintaining the input of the key in which the consonant ' 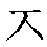 ' is arranged with the one finger 300, the character ' 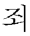 ' is displayed on the display unit 161.

In FIG. 3b(q), in the multi-input mode, when the user performs a drag twice (1), (2) in a downward direction in the lower region 172 by using another finger 400 while maintaining the input of the key in which the consonant ' 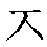 ' is arranged with the one finger 300, the character ' 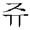 ' is displayed on the display unit 161.

In FIG. 3b(r), in the multi-input mode, when the user performs a drag twice (1), (2) in an upward direction in the lower region 172 by using another finger 400 while maintaining the input of the key in which the consonant ' 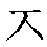 ' is arranged with the one finger 300, the character ' 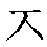 ' is displayed on the display unit 161.

In FIG. 3b(s), in the multi-input mode, when the user first performs a drag twice (1), (2) in the left direction in the right region 171 and then touches (2) the right region 171 by using another finger 400 while maintaining the input of the key in which the consonant ' 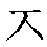 ' is arranged with the one finger 300, the character ' 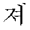 ' is displayed on the display unit 161.

In FIG. 3b(t), in the multi-input mode, when the user first performs a drag twice (1), (2) in the right direction in the right region 171 and then touches (3) the right region 171 by using another finger 400 while maintaining the input of the key in which the consonant ' 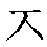 ' is arranged with the one finger 300, the character ' 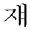 ' is displayed on the display unit 161.

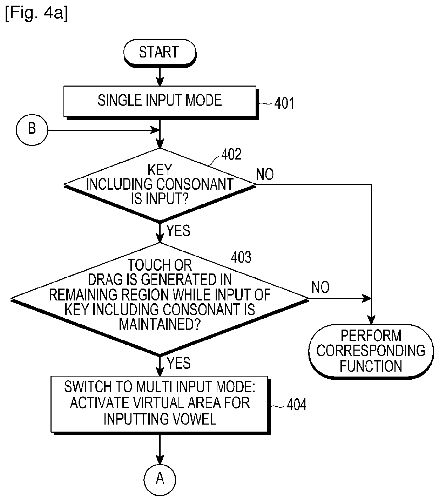

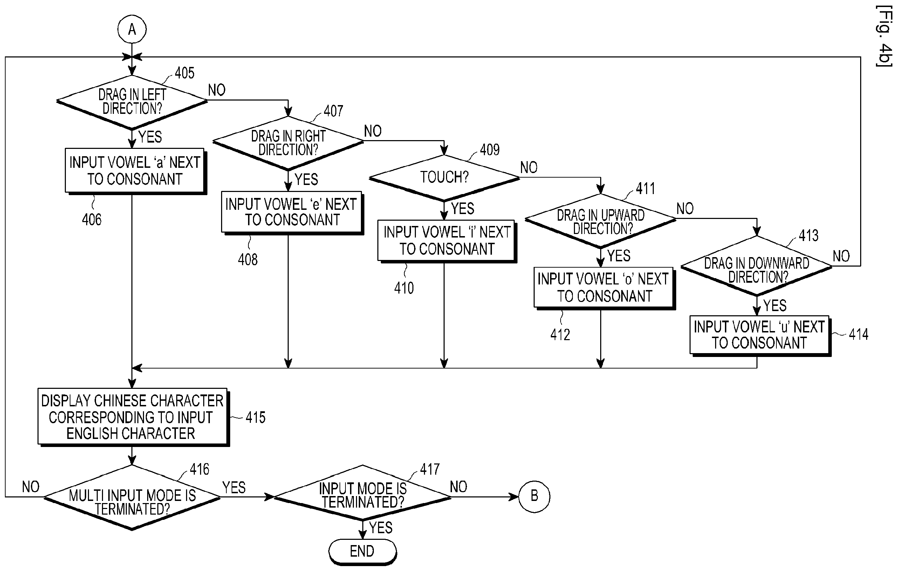

FIGs. 4a and 4b are flowcharts illustrating an operation of inputting characters in a portable terminal according to another embodiment of the present invention. An example of an extraction of a Chinese character according to an operation of inputting an English character will be described in the another embodiment of the present invention, and an input unit of a touch screen unit for inputting characters includes keys in which consonants of the English character are arranged.

Hereinafter, the embodiment of the present invention will be described with reference to FIGs. 4a and 4b, and FIG. 1 in detail.

Referring to FIGs. 4a and 4b, when a key, in which a predetermined consonant is arranged, among multiple keys included in the input unit of the touch screen unit 160 is input in step 401 which is a single input mode of the portable terminal, the controller 110 detects the input of the key and displays the consonant arranged in the input key on a display unit of the touch screen unit 160 in step 402.

However, when a touch or a drag is generated in the input unit of the touch screen unit 160 during the maintenance of the input of the key in which the consonant is arranged, the controller 110 detects the generation of the touch or drag in step 403 and processes step 404 of switching the single input mode of the portable terminal to a multi input mode.

In step 404, the controller 110 notifies a user of the switching from the single input mode to the multi input mode through at least one of an indicator such as an icon, a haptic effect, an alarming sound, and change of a background image of the input mode, which are discriminated from those of the single input mode.

Further, in step 404, the controller 110 activates the input unit of the touch screen unit 160 as a virtual area for inputting vowels. The virtual area includes all remaining regions other than the key in which the consonant input in step 402 is arranged.

Further, in step 404, the controller 110 vaguely or transparently displays data such as a character, a number, and a special sign, arranged on the multiple keys included in the input unit of the touch screen unit 160, which is activated as the virtual area, and displays the type of corresponding vowels which can be input through a touch or a direction of a drag on the virtual area.

When a straight drag in a left direction is generated in step 404, the controller 110 detects the generation of the straight drag in a left direction in step 405 and processes step 406 of inputting and displaying a vowel 'a' next to the input consonant.

When a straight drag in a right direction is generated in step 404, the controller 110 detects the generation of the straight drag in a right direction in step 407 and processes step 408 of inputting and displaying a vowel 'e' next to the consonant input and displayed in the display unit of the touch screen unit 160 in step 402.

When a touch is generated in step 404, the controller 110 detects the generation of the touch in step 409 and processes step 410 of inputting and displaying a vowel 'i' next to the consonant input and displayed in the display unit of the touch screen unit 160 in step 402.

When a straight drag in an upward direction is generated in step 404, the controller 110 detects the generation of the straight drag in an upward direction in step 411 and processes step 412 of inputting and displaying a vowel 'o' next to the consonant input and displayed in the display unit of the touch screen unit 160 in step 402.

When a straight drag in a downward direction is generated in step 404, the controller 110 detects the generation of the straight drag in a downward direction in step 413 and processes step 414 of inputting and displaying a vowel 'u' next to the consonant input and displayed in the display unit of the touch screen unit 160 in step 402.

When an English character is input through the multi input mode, the controller 110 detects the input of the English character and displays a candidate group of Chinese characters corresponding to the input English character. When a predetermined Chinese character is selected from the displayed candidate group of the Chinese characters, the controller 110 detects the selection of the predetermined Chinese character and progresses step 415 of changing the English character displayed on the display unit of the touch screen unit to the selected Chinese character and displaying the changed Chinese character.

When the maintenance of the input of the key in which the consonant is arranged is terminated during the aforementioned multi input mode, the controller 110 detects the termination of the input of the key, terminates the multi input mode, and switches the multi input mode to the single input mode in step 416.

In the switched single input mode, it is possible to add a consonant to the character input in the multi input mode and input the characters.

When it is determined that the input mode is terminated, the controller 110 detects the termination of the input mode and terminates the input mode in step 417.

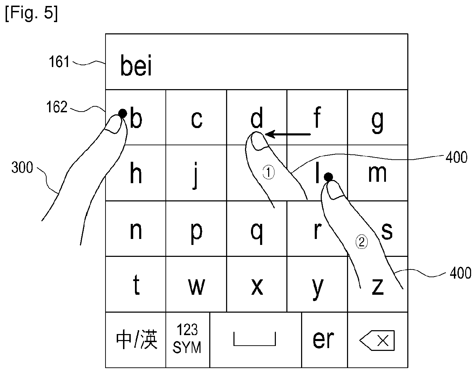

FIG. 5 is a view illustrating an operation of inputting characters of FIGs. 4a and 4b.

In FIG. 5, when a key in which a consonant 'b' is arranged is first input by a finger 300 through the input unit of the touch screen unit 160 including the keys in which only English consonants are arranged in the single input mode, the input consonant 'b' is displayed on the display unit 161 of the touch screen unit 160.

When a drag in a left direction by another finger 400 is generated in a region other than the key in which the consonant 'b' is arranged while the input of the key in which the consonant 'b' is arranged is maintained by the finger 300, the single input mode is switched to the multi input mode and a vowel 'e' is displayed next to the consonant 'b' displayed on the display unit 161.

When a touch by another finger 400 is generated in a region other than the key in which the consonant 'b' is arranged while the input of the key in which the consonant 'b' is arranged is maintained by the finger 300, a vowel 'i' is displayed next to the characters 'be' displayed on the display unit 161.

When the character 'bei' is displayed on the display unit 161, a candidate group of Chinese characters corresponding to the character 'bei' is displayed on a predetermined region of the touch screen unit 160.

Then, in a case where an English consonant has to be input, the multi input mode is switched to the single input mode according to the termination of the input of the key in which the consonant 'b' is arranged so that a corresponding English consonant can be input in the single input mode.

In the method of inputting the English vowels according to the another embodiment of the present invention, the vowel 'a' is input through a drag in a left direction, the vowel 'e' is input through a drag in a right direction, the vowel 'i' is input through a touch, the vowel 'o' is input through a drag in an upward direction, and the vowel 'u' is input through a drag in a downward direction, but the aforementioned input scheme may be changed by a user.

While the present invention has been shown and described with reference to certain embodiments and drawings thereof, it will be understood by those skilled in the art that various changes in form and details may be made therein. The scope of the invention is defined by the appended claims.

## Claims

1. A method for inputting characters, the method comprising the steps of:
detecting (220) an input of a key corresponding to a consonant arranged in a first region of a touch screen among multiple keys arranged on the touch screen;
detecting (230) a touch or a drag in a second region of the touch screen while the input of the key is maintained;
switching (240), when detecting the touch or the drag in the second region of the touch screen while the input of the key is maintained, to a multi-input mode for inputting a vowel, wherein the switching (240) to the multi-input mode comprises:
activating a region of the touch screen, which is different from the first region corresponding to the detected input of the key, as a virtual area for inputting a vowel, and
dividing the virtual area into multiple areas based on the first region corresponding to the detected input of the key;
identifying (250, 260, 270) a region corresponding to the second area where the touch or the drag is detected among the multiple areas;
combining (257, 262, 264, 272, 274, 276) a vowel corresponding to the touch or the drag with the consonant, by identifying the vowel corresponding to the touch or the drag based on the identified region; and
displaying a combined character of the vowel and the consonant.

2. The method as claimed in claim 1, wherein the vowel is determined according to a shape of the drag in the virtual area.

3. The method as claimed in claim 1, wherein the multiple regions are visually divided and displayed according to a selection of a user.

4. The method as claimed in claim 1, further comprising:
transparently displaying data arranged on the multiple keys; and
displaying vowels that are input through a touch or a drag on the multiple areas included in the virtual area.

5. The method as claimed in claim 1, wherein, when the virtual area is divided into a right region and a lower region based on the key in which the consonant is arranged, the step of combining the vowel corresponding to the touch or the drag with the consonant comprises:
combining (252), when a touch is generated in the right region, a vowel ' 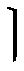 ' with the consonant;
combining (255), when a straight drag in a right direction is generated in the right region, a vowel ' 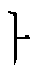 ' with the consonant;
combining (255), when a straight drag in a left direction is generated in the right region, a vowel ' 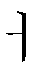 ' with the consonant;
combining (255), when a straight drag in a right direction is generated twice in the right region, a vowel ' 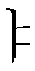 ' with the consonant;
combining (255), when a straight drag in a left direction is generated twice in the right region, a vowel ' 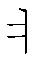 ' with the consonant;
combining (257), when a half-ellipsoidal drag in a left direction is generated in the right region, a vowel ' 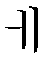 ' with the consonant;
combining (257), when a half-ellipsoidal drag in a right direction is generated in the right region, a vowel ' 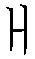 ' with the consonant;
combining (259), when a straight drag in a left direction is generated twice and then a touch is generated in the right region, a vowel ' 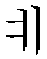 ' with the consonant; and
combining (259), when a straight drag in a right direction is generated twice and then a touch is generated in the right region, a vowel ' 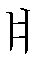 ' with the consonant.

6. The method as claimed in claim 5, further comprising:
combining (262), when a touch is generated in the lower region, a vowel ' 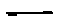 ' with the consonant;
combining (264), when a straight drag in a downward direction is generated in the lower region, a vowel ' 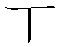 ' with the consonant;
combining (264), when a straight drag in an upward direction is generated in the lower region, a vowel ' 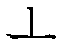 ' with the consonant;
when a straight drag in a downward direction is generated twice in the lower region, combining (264) a vowel ' 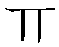 ' with the consonant; and
when a straight drag in an upward direction is generated twice in the lower region, combining (264) a vowel ' 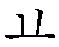 ' with the consonant.

7. The method as claimed in claim 5, further comprising:
combining (272), when a touch is generated in the lower region and then a touch is generated in the right region, a vowel ' 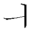 ' with the consonant;
combining (274), when a straight drag in a downward direction is generated in the lower region and then a straight drag in a left direction is generated in the right region, a vowel ' 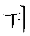 ' with the consonant;
combining (274), when a straight drag in an upward direction is generated in the lower region and then a half-ellipsoidal drag in a right direction is generated in the right region, a vowel ' 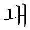 ' with the consonant;
combining (274), when a straight drag in an upward direction is generated in the lower region and then a straight drag in a right direction is generated in the right region, a vowel ' 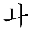 ' with the consonant;
combining (276), when a straight drag in a downward direction is generated in the lower region and then a touch is generated in the right region, a vowel ' 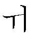 ' with the consonant;
combining (276), when a straight drag in an upward direction is generated in the lower region and then a touch is generated in the right region, a vowel ' 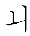 ' with the consonant; and
combining (276), when a straight drag in a downward direction is generated in the lower region and then a half-ellipsoidal drag in a left direction is generated in the right region, a vowel ' 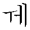 ' with the consonant.

8. The method as claimed in claim 1, wherein the step of displaying a combined character comprises:
inputting (406) and displaying, when a straight drag in a left direction is generated, a vowel 'a' next to the consonant;
inputting (408) and displaying, when a straight drag in a right direction is generated, a vowel 'e' next to the consonant;
inputting and displaying, when a touch is generated, a vowel 'i' next to the consonant;
inputting (412) and displaying, when a straight drag in an upward direction is generated, a vowel 'o' next to the consonant; and
inputting (414) and displaying, when a straight drag in a downward direction is generated, a vowel 'u' next to the consonant.

9. A device for inputting characters, comprising:
a touch screen unit (160) in which multiple keys are activated as a virtual area for inputting a vowel in a multi-input mode; and
a controller (110) arranged to:
detect an input of a key corresponding to a consonant arranged in a first region of a touch screen among multiple keys arranged on the touch screen;
detect a touch or a drag in a second region of the touch screen while the input of the key is maintained;
switch to the multi-input mode when detecting the touch or the drag in a second region of the touch screen unit (160) while the input of the key is maintained, wherein the switching to the multi-input mode comprises:
activating a region of the touch screen, which is different from the first region corresponding to the detected input of the key, as a virtual area for inputting a vowel, and
dividing the virtual area into multiple areas based on the first region corresponding to the detected input of the key;
identify a region corresponding to the second area where the touch or the drag is detected among the multiple areas;
combine a vowel corresponding to the touch or the drag with the consonant by identifying the vowel corresponding to the touch or the drag based on the identified region; and
display a combined character of the vowel and the consonant.

10. The device as claimed in claim 9, wherein the vowel is determined according to a shape of the drag in the virtual area.

11. The device as claimed in claim 9, wherein the multiple regions are visually divided and displayed according to a selection of a user.

12. The device as claimed in claim 9, wherein the controller (110) is arranged to control to transparently display data arranged on the multiple keys, and to display vowels that are input through a touch or a drag on the multiple areas included in the virtual area.

13. The device as claimed in claim 9, wherein, when the virtual area is divided into a right region and a lower region based on the key in which the consonant is arranged, the controller (110) is arranged to control so that:
when a touch is generated in the right region, a vowel ' 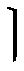 ' is combined with the consonant and the combination of the vowel ' 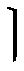 ' with the consonant is displayed;
when a straight drag in a right direction is generated in the right region, a vowel ' 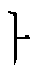 ' is combined with the consonant and a combined character of the vowel ' 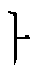 ' with the consonant is displayed;
when a straight drag in a left direction is generated in the right region, a vowel ' 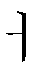 ' is combined with the consonant and a combined character of the vowel ' 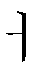 ' with the consonant is displayed;
when a straight drag in a right direction is continuously generated two times in the right region, a vowel ' 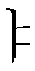 ' is combined with the consonant and a combined character of the vowel ' 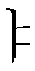 ' with the consonant is displayed;
when a straight drag in a left direction is continuously generated two times in the right region, a vowel ' 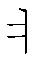 ' is combined with the consonant and a combined character of the vowel ' 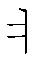 ' with the consonant is displayed;
when a half-ellipsoidal drag in a left direction is generated in the right region, a vowel ' 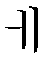 ' is combined with the consonant and a combined character of the vowel ' 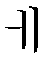 ' with the consonant is displayed;
when a half-ellipsoidal drag in a right direction is generated in the right region, a vowel ' 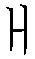 ' is combined with the consonant and a combined character of the vowel ' 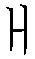 ' with the consonant is displayed;
when a straight drag in a left direction is continuously generated two times and then a touch is generated in the right region, a vowel ' 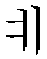 ' is combined with the consonant and a combined character of the vowel ' 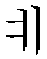 ' with the consonant is displayed; and
when a straight drag in a right direction is continuously generated two times and then a touch is generated in the right region, a vowel ' 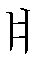 ' is combined with the consonant and a combined character of the vowel ' 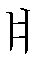 ' with the consonant is displayed.

14. The device as claimed in claim 13, wherein the controller (110) is arranged to control so that:
when a touch is generated in the lower region, a vowel ' 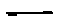 ' is combined with the consonant and a combined character is displayed;
when a straight drag in a downward direction is generated in the lower region, a vowel ' 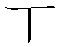 ' is combined with the consonant and the combination of the vowel ' 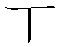 ' with the consonant is displayed;
when a straight drag in an upward direction is generated in the lower region, a vowel ' 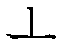 ' is combined with the consonant and the combination of the vowel ' 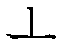 ' with the consonant is displayed;
when a straight drag in a downward direction is continuously generated two times in the lower region, a vowel ' 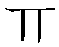 ' is combined with the consonant and the combination of the vowel ' 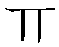 ' with the consonant is displayed; and
when a straight drag in an upward direction is continuously generated two times in the lower region, a vowel ' 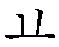 ' is combined with the consonant and the combination of the vowel ' 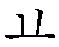 ' with the consonant is displayed.

15. The device as claimed in claim 13, wherein the controller (110) is arranged to control so that:
when a touch is generated in the lower region and then a touch is generated in the right region, a vowel ' 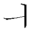 ' is combined with the consonant and the combination of the vowel ' 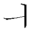 ' with the consonant is displayed;
when a straight drag in a downward direction is generated in the lower region and then a straight drag in a left direction is generated in the right region, a vowel ' 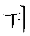 ' is combined with the consonant and the combination of the vowel ' 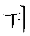 ' with the consonant is displayed;
when a straight drag in an upward direction is generated in the lower region and then a half-ellipsoidal drag in a right direction is generated in the right region, a vowel ' 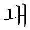 ' is combined with the consonant and the combination of the vowel ' 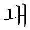 ' with the consonant is displayed;
when a straight drag in an upward direction is generated in the lower region and then a straight drag in a right direction is generated in the right region, a vowel ' 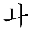 ' combined with the consonant and the combination of the vowel ' 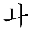 ' with the consonant is displayed;
when a straight drag in a downward direction is generated in the lower region and then a touch is generated in the right region, a vowel ' 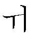 ' is combined with the consonant and the combination of the vowel ' 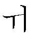 ' with the consonant is displayed;
when a straight drag in an upward direction is generated in the lower region and then a touch is generated in the right region, a vowel ' 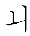 ' is combined with the consonant and the combination of the vowel ' 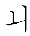 ' with the consonant is displayed; and
when a straight drag in a downward direction is generated in the lower region and then a half-ellipsoidal drag in a left direction is generated in the right region, a vowel ' 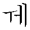 ' is combined with the consonant and the combination of the vowel ' 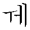 ' with the consonant is displayed.

16. The device as claimed in claim 9, wherein the controller (110) is arranged to control so that:
when a straight drag in a left direction is generated, a vowel 'a' is input and displayed next to the consonant;
when a straight drag in a right direction is generated, a vowel 'e' is input and displayed next to the consonant;
when a touch is generated, a vowel 'i' is input and displayed next to the consonant;
when a straight drag in an upward direction is generated, a vowel 'o' is input and displayed next to the consonant; and
when a straight drag in a downward direction is generated, a vowel 'u' is input and displayed next to the consonant.

## Patentansprüche

1. Verfahren zum Eingeben von Zeichen, wobei das Verfahren die folgenden Schritte umfasst:
Detektieren (220) einer Eingabe einer einem Konsonanten entsprechenden Taste, angeordnet in einer ersten Region eines Berührungsbildschirms unter mehreren auf dem Berührungsbildschirm angeordneten Tasten;
Detektieren (230) einer Berührung oder eines Ziehens in einer zweiten Region des Berührungsbildschirms, während die Eingabe der Taste aufrechterhalten wird;
Umschalten (240), wenn die Berührung oder das Ziehen in der zweiten Region des Berührungsbildschirms detektiert wird, während die Eingabe der Taste aufrechterhalten wird, auf einen Mehrfacheingabemodus zum Eingeben eines Vokals, wobei das Umschalten (240) auf den Mehrfacheingabemodus umfasst:
Aktivieren einer Region des Berührungsbildschirms, die sich von der der detektierten Eingabe der Taste entsprechenden ersten Region unterscheidet, als virtuellen Bereich für das Eingaben eines Vokals und Aufteilen des virtuellen Bereichs in mehrere Bereiche basierend auf der der detektierten Eingabe der Taste entsprechenden ersten Region;
Identifizieren (250, 260, 270) einer dem zweiten Bereich entsprechenden Region, wo die Berührung oder das Ziehen detektiert wird, unter den mehreren Bereichen,
Kombinieren (257, 262, 264, 272, 274, 276) eines der Berührung oder dem Ziehen entsprechenden Vokals mit dem Konsonanten durch Identifizieren des der Berührung oder dem Ziehen entsprechenden Vokals basierend auf der identifizierten Region; und
Anzeigen eines kombinierten Zeichens aus dem Vokal und dem Konsonanten.

2. Verfahren nach Anspruch 1, wobei der Vokal entsprechend einer Form des Ziehens im virtuellen Bereich bestimmt wird.

3. Verfahren nach Anspruch 1, wobei die mehreren Regionen entsprechend einer Auswahl eines Nutzers visuell unterteilt und angezeigt werden.

4. Verfahren nach Anspruch 1, ferner umfassend:
transparentes Anzeigen von Daten, die auf den mehreren Tasten angeordnet sind; und
Anzeigen von Vokalen, die über eine Berührung oder ein Ziehen auf den im virtuellen Bereich enthaltenen mehreren Bereichen eingegeben werden.

5. Verfahren nach Anspruch 1, wobei, wenn der virtuelle Bereich basierend auf der Taste, in der der Konsonant angeordnet ist, in eine rechte Region und eine untere Region unterteilt wird, der Schritt des Kombinierens des der Berührung oder dem Ziehen entsprechenden Vokals mit dem Konsonanten umfasst:
Kombinieren (252), wenn eine Berührung in der rechten Region generiert wird, eines Vokals ' 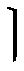 ' mit dem Konsonanten;
Kombinieren (255), wenn ein gerades Ziehen in einer Richtung nach rechts in der rechten Region generiert wird, eines Vokals ' 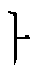 ' mit dem Konsonanten;
Kombinieren (255), wenn ein gerades Ziehen in einer Richtung nach links in der rechten Region generiert wird, eines Vokals ' 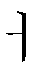 ' mit dem Konsonanten;
Kombinieren (255), wenn ein gerades Ziehen in einer Richtung nach rechts zweimal in der rechten Region generiert wird, eines Vokals ' 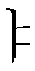 ' mit dem Konsonanten;
Kombinieren (255), wenn ein gerades Ziehen in einer Richtung nach links zweimal in der rechten Region generiert wird, eines Vokals ' 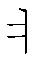 ' mit dem Konsonanten;
Kombinieren (257), wenn ein halb-ellipsenförmiges Ziehen in einer Richtung nach links in der rechten Region generiert wird, eines Vokals ' 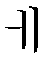 ' mit dem Konsonanten;
Kombinieren (257), wenn ein halb-ellipsenförmiges Ziehen in einer Richtung nach rechts in der rechten Region generiert wird, eines Vokals ' 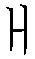 ' mit dem Konsonanten;
Kombinieren (259), wenn ein gerades Ziehen in einer Richtung nach links zweimal generiert wird und dann eine Berührung in der rechten Region generiert wird, eines Vokals ' 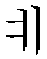 ' mit dem Konsonanten; und
Kombinieren (259), wenn ein gerades Ziehen in einer Richtung nach rechts zweimal generiert wird und dann eine Berührung in der rechten Region generiert wird, eines Vokals ' 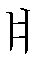 ' mit dem Konsonanten.

6. Verfahren nach Anspruch 5, ferner umfassend:
Kombinieren (262), wenn eine Berührung in der unteren Region generiert wird, eines Vokals ' 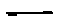 ' mit dem Konsonanten;
Kombinieren (264), wenn ein gerades Ziehen in einer Richtung nach unten in der unteren Region generiert wird, eines Vokals ' 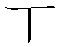 ' mit dem Konsonanten;
Kombinieren (264), wenn ein gerades Ziehen in einer Richtung nach oben in der unteren Region generiert wird, eines Vokals ' 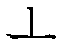 ' mit dem Konsonanten;
wenn ein gerades Ziehen in einer Richtung nach unten zweimal in der unteren Region generiert wird, Kombinieren (264) eines Vokals ' 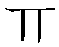 ' mit dem Konsonanten; und
wenn ein gerades Ziehen in einer Richtung nach oben zweimal in der unteren Region generiert wird, Kombinieren (264) eines Vokals ' 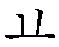 ' mit dem Konsonanten.

7. Verfahren nach Anspruch 5, ferner umfassend:
Kombinieren (272), wenn eine Berührung in der unteren Region generiert wird und dann eine Berührung in der rechten Region generiert wird, eines Vokals ' 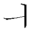 ' mit dem Konsonanten;
Kombinieren (274), wenn ein gerades Ziehen in einer Richtung nach unten in der unteren Region generiert wird und dann ein gerades Ziehen in einer Richtung nach links in der rechten Region generiert wird, eines Vokals ' 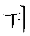 ' mit dem Konsonanten;
Kombinieren (274), wenn ein gerades Ziehen in einer Richtung nach oben in der unteren Region generiert wird und dann ein halb-ellipsenförmiges Ziehen in einer Richtung nach rechts in der rechten Region generiert wird, eines Vokals ' 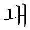 ' mit dem Konsonanten;
Kombinieren (274), wenn ein gerades Ziehen in einer Richtung nach oben in der unteren Region generiert wird und dann ein gerades Ziehen in einer Richtung nach rechts in der rechten Region generiert wird, eines Vokals ' 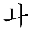 ' mit dem Konsonanten;
Kombinieren (276), wenn ein gerades Ziehen in einer Richtung nach unten in der unteren Region generiert wird und dann eine Berührung in der rechten Region generiert wird, eines Vokals ' 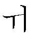 ' mit dem Konsonanten;
Kombinieren (276), wenn ein gerades Ziehen in einer Richtung nach oben in der unteren Region generiert wird und dann eine Berührung in der rechten Region generiert wird, eines Vokals ' 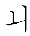 ' mit dem Konsonanten; und
Kombinieren (276), wenn ein gerades Ziehen in einer Richtung nach unten in der unteren Region generiert wird und dann ein halb-ellipsenförmiges Ziehen in einer Richtung nach links in der rechten Region generiert wird, eines Vokals ' 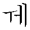 ' mit dem Konsonanten.

8. Verfahren nach Anspruch 1, wobei der Schritt des Anzeigens eines kombinierten Zeichens umfasst:
Eingeben (406) und Anzeigen, wenn ein gerades Ziehen in einer Richtung nach links generiert wird, eines Vokals 'a' neben dem Konsonanten;
Eingeben (408) und Anzeigen, wenn ein gerades Ziehen in einer Richtung nach rechts generiert wird, eines Vokals 'e' neben dem Konsonanten;
Eingeben und Anzeigen, wenn eine Berührung generiert wird, eines Vokals 'i' neben dem Konsonanten;
Eingeben (412) und Anzeigen, wenn ein gerades Ziehen in einer Richtung nach oben generiert wird, eines Vokals 'o' neben dem Konsonanten; und
Eingeben (414) und Anzeigen, wenn ein gerades Ziehen in einer Richtung nach unten generiert wird, eines Vokals 'u' neben dem Konsonanten.

9. Vorrichtung zum Eingeben von Zeichen, umfassend:
eine Berührungsbildschirmeinheit (160), in der mehrere Tasten als virtueller Bereich für das Eingeben eines Vokals in einem Mehrfacheingabemodus aktiviert sind; und
eine Steuerung (110), die angeordnet ist, um:
eine Eingabe einer einem Konsonanten entsprechenden Taste zu detektieren, die in einer ersten Region eines Berührungsbildschirms unter mehreren auf dem Berührungsbildschirm angeordneten Tasten angeordnet ist;
eine Berührung oder ein Ziehen in einer zweiten Region des Berührungsbildschirms, während die Eingabe der Taste aufrechterhalten wird, zu detektieren;
auf den Mehrfacheingabemodus umzuschalten, wenn die Berührung oder das Ziehen in einer zweiten Region der Berührungsbildschirmeinheit (160) detektiert wird, während die Berührung der Taste aufrechterhalten wird, wobei das Umschalten auf den Mehrfacheingabemodus umfasst:
Aktivieren einer Region des Berührungsbildschirms, die sich von der der detektierten Eingabe der Taste entsprechenden ersten Region unterscheidet, als virtueller Bereich für das Eingeben eines Vokals und
Aufteilen des virtuellen Bereichs in mehrere Bereiche basierend auf der der detektierten Eingabe der Taste entsprechenden ersten Region;
Identifizieren einer dem zweiten Bereich, wo unter den mehreren Bereichen die Berührung oder das Ziehen detektiert wird, entsprechenden Region;
Kombinieren eines der Berührung oder dem Ziehen entsprechenden Vokals mit dem Konsonanten durch Identifizieren des der Berührung oder dem Ziehen entsprechenden Vokals basierend auf der identifizieren Region; und
Anzeigen eines kombinierten Zeichens aus dem Vokal und dem Konsonanten.

10. Vorrichtung nach Anspruch 9, wobei der Vokal entsprechend einer Form des Ziehens im virtuellen Bereich bestimmt wird.

11. Vorrichtung nach Anspruch 9, wobei die mehreren Regionen entsprechend einer Auswahl eines Nutzers visuell unterteilt und angezeigt werden.

12. Vorrichtung nach Anspruch 9, wobei die Steuerung (110) angeordnet ist, um die transparente Anzeige von auf den mehreren Tasten angeordneten Daten zu steuern und Vokale anzuzeigen, die über eine Berührung oder ein Ziehen auf den im virtuellen Bereich enthaltenen mehreren Bereichen eingegeben werden.

13. Vorrichtung nach Anspruch 9, wobei, wenn der virtuelle Bereich basierend auf der Taste, in der der Konsonant angeordnet ist, in eine rechte Region und eine untere Region unterteilt wird, die Steuerung (110) zum Steuern angeordnet ist, so dass:
wenn eine Berührung in der rechten Region generiert wird, ein Vokal ' 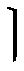 ' mit dem Konsonanten kombiniert wird und die Kombination des Vokals ' 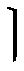 ' mit dem Konsonanten angezeigt wird;
wenn ein gerades Ziehen in einer Richtung nach rechts in der rechten Region generiert wird, ein Vokal ' 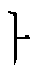 ' mit dem Konsonanten kombiniert wird und ein kombiniertes Zeichen aus dem Vokal ' 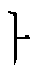 ' mit dem Konsonanten angezeigt wird;
wenn ein gerades Ziehen in einer Richtung nach links in der rechten Region generiert wird, ein Vokal ' 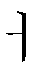 ' mit dem Konsonanten kombiniert wird und ein kombiniertes Zeichen aus dem Vokal ' 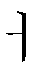 ' mit dem Konsonanten angezeigt wird;
wenn ein gerades Ziehen in einer Richtung nach rechts kontinuierlich zweimal in der rechten Region generiert wird, ein Vokal ' 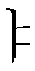 ' mit dem Konsonanten kombiniert wird und ein kombiniertes Zeichen aus dem Vokal ' 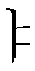 ' mit dem Konsonanten angezeigt wird;
wenn ein gerades Ziehen in einer Richtung nach links kontinuierlich zweimal in der rechten Region generiert wird, ein Vokal ' 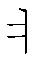 ' mit dem Konsonanten kombiniert wird und ein kombiniertes Zeichen aus dem Vokal ' 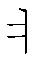 ' mit dem Konsonanten angezeigt wird;
wenn ein halb-ellipsenförmiges Ziehen in einer Richtung nach links in der rechten Region generiert wird, ein Vokal ' 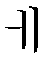 ' mit dem Konsonanten kombiniert wird und ein kombiniertes Zeichen aus dem Vokal ' 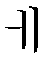 ' mit dem Konsonanten angezeigt wird;
wenn ein halb-ellipsenförmiges Ziehen in einer Richtung nach rechts in der rechten Region generiert wird, ein Vokal ' 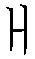 ' mit dem Konsonanten kombiniert wird und ein kombiniertes Zeichen aus dem Vokal ' 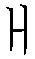 ' mit dem Konsonanten angezeigt wird;
wenn ein gerades Ziehen in einer Richtung nach links kontinuierlich zweimal generiert wird und dann eine Berührung in der rechten Region generiert wird, ein Vokal ' 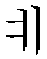 ' mit dem Konsonanten kombiniert wird und ein kombiniertes Zeichen aus dem Vokal ' 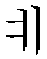 ' mit dem Konsonanten angezeigt wird; und
wenn ein gerades Ziehen in einer Richtung nach rechts kontinuierlich zweimal generiert wird und dann eine Berührung in der rechten Region generiert wird, ein Vokal ' 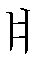 ' mit dem Konsonanten kombiniert wird und ein kombiniertes Zeichen aus dem Vokal ' 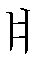 ' mit dem Konsonanten angezeigt wird.

14. Vorrichtung nach Anspruch 13, wobei die Steuerung (110) zum Steuern angeordnet ist, so dass:
wenn eine Berührung in der unteren Region generiert wird, ein Vokal ' 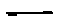 ' mit dem Konsonanten kombiniert wird und ein kombiniertes Zeichen angezeigt wird;
wenn ein gerades Ziehen in einer Richtung nach unten in der unteren Region generiert wird, ein Vokal ' 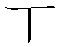 ' mit dem Konsonanten kombiniert wird und die Kombination des Vokals ' 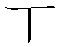 ' mit dem Konsonanten angezeigt wird;
wenn ein gerades Ziehen in einer Richtung nach oben in der unteren Region generiert wird, ein Vokal ' 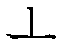 ' mit dem Konsonanten kombiniert wird und die Kombination des Vokals ' 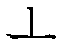 ' mit dem Konsonanten angezeigt wird;
wenn ein gerades Ziehen in einer Richtung nach unten kontinuierlich zweimal in der unteren Region generiert wird, ein Vokal ' 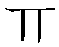 ' mit dem Konsonanten kombiniert wird und die Kombination des Vokals ' 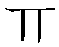 ' mit dem Konsonanten angezeigt wird; und
wenn ein gerades Ziehen in einer Richtung nach oben kontinuierlich zweimal in der unteren Region generiert wird, ein Vokal ' 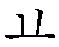 ' mit dem Konsonanten kombiniert wird und die Kombination des Vokal ' 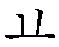 ' mit dem Konsonanten angezeigt wird.

15. Vorrichtung nach Anspruch 13, wobei die Steuerung (110) zum Steuern angeordnet ist, so dass:
wenn eine Berührung in der unteren Region generiert wird und dann eine Berührung in der rechten Region generiert wird, ein Vokal ' 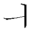 ' mit dem Konsonanten kombiniert wird und die Kombination des Vokals ' 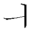 ' mit dem Konsonanten angezeigt wird;
wenn ein gerades Ziehen in einer Richtung nach unten in der unteren Region generiert wird und dann ein gerades Ziehen in einer Richtung nach links in der rechten Region generiert wird, ein Vokal ' 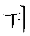 ' mit dem Konsonanten kombiniert wird und die Kombination des Vokals ' 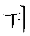 ' mit dem Konsonanten angezeigt wird;
wenn ein gerades Ziehen in einer Richtung nach oben in der unteren Region generiert wird und dann ein halb-ellipsenförmiges Ziehen in einer Richtung nach rechts in der rechten Region generiert wird, ein Vokal ' 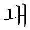 ' mit dem Konsonanten kombiniert wird und die Kombination des Vokals ' 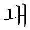 ' mit dem Konsonanten angezeigt wird;
wenn ein gerades Ziehen in einer Richtung nach oben in der unteren Region generiert wird und dann ein gerades Ziehen in einer Richtung nach rechts in der rechten Region generiert wird, ein Vokal ' 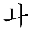 ' mit dem Konsonanten kombiniert wird und die Kombination des Vokals ' 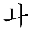 ' mit dem Konsonanten angezeigt wird;
wenn ein gerades Ziehen in einer Richtung nach unten in der unteren Region generiert wird und dann eine Berührung in der rechten Region generiert wird, ein Vokal ' 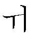 ' mit dem Konsonanten kombiniert wird und die Kombination des Vokals ' 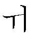 ' mit dem Konsonanten angezeigt wird;
wenn ein gerades Ziehen in einer Richtung nach oben in der unteren Region generiert wird und dann eine Berührung in der rechten Region generiert wird, ein Vokal ' 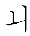 ' mit dem Konsonanten kombiniert wird und die Kombination des Vokals ' 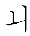 ' mit dem Konsonanten angezeigt wird; und
wenn ein gerades Ziehen in einer Richtung nach unten in der unteren Region generiert wird und dann ein halb-ellipsenförmiges Ziehen in einer Richtung nach links in der rechten Region generiert wird, ein Vokal ' 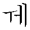 ' mit dem Konsonanten kombiniert wird und die Kombination des Vokals ' 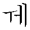 ' mit dem Konsonanten angezeigt wird.

16. Vorrichtung nach Anspruch 9, wobei die Steuerung (110) zum Steuern angeordnet ist, so dass:
wenn ein gerades Ziehen in einer Richtung nach links generiert wird, ein Vokal 'a' eingegeben und neben dem Konsonanten angezeigt wird;
wenn ein gerades Ziehen in einer Richtung nach rechts generiert wird, ein Vokal 'e' eingegeben und neben dem Konsonanten angezeigt wird;
wenn eine Berührung generiert wird, ein Vokal 'i' eingegeben und neben dem Konsonanten angezeigt wird;
wenn ein gerades Ziehen in einer Richtung nach oben generiert wird, ein Vokal 'o' eingegeben und neben dem Konsonanten angezeigt wird; und
wenn ein gerades Ziehen in einer Richtung nach unten generiert wird, ein Vokal 'u' eingegeben und neben dem Konsonanten angezeigt wird.

## Revendications

1. Procédé permettant la saisie de caractères, ledit procédé comprenant les étapes de :
détection (220) d'une saisie d'une touche correspondant à une consonne agencée dans une première région d'un écran tactile parmi de multiples touches agencées sur l'écran tactile ;
détection (230) d'un toucher ou d'un glisser dans une seconde région de l'écran tactile pendant que la saisie de la touche est maintenue ;
la commutation (240), lorsque le toucher ou le glisser est détecté dans la seconde région de l'écran tactile pendant que la saisie de la touche est maintenue, en mode de saisies multiples pour la saisie d'une voyelle, ladite commutation (240) en mode de saisies multiples comprenant :
l'activation d'une région de l'écran tactile, qui est différente de la première région correspondant à la saisie détectée de la touche, en tant que zone virtuelle en vue de la saisie d'une voyelle, et la division de la zone virtuelle en de multiples zones sur la base de la première région correspondant à la saisie détectée de la touche ;
l'identification (250, 260, 270) d'une région correspondant à la seconde zone où le toucher ou le glisser est détecté parmi les multiples zones ;
la combinaison (257, 262, 264, 272, 274, 276) d'une voyelle correspondant au toucher ou au glisser avec la consonne, en identifiant la voyelle correspondant au toucher ou au glisser sur la base de la région identifiée ; et
l'affichage d'un caractère combiné de la voyelle et de la consonne.

2. Procédé selon la revendication 1, ladite voyelle étant déterminée selon une forme du glisser dans la zone virtuelle.

3. Procédé selon la revendication 1, lesdites multiples régions étant divisées visuellement et affichées selon le choix d'un utilisateur.

4. Procédé selon la revendication 1, comprenant en outre :
l'affichage de manière transparente de données agencées sur les multiples touches ;
et l'affichage des voyelles qui sont saisies par un toucher ou un glisser sur les multiples zones comprises dans la zone virtuelle.

5. Procédé selon la revendication 1, lorsque la zone virtuelle est divisée en une région droite et une région inférieure sur la base de la touche dans laquelle la consonne est agencée, ladite étape de combinaison de la voyelle correspondant au toucher ou au glisser avec la consonne comprenant :
la combinaison (252), lorsqu'un toucher est effectué dans la région droite, d'une voyelle ' 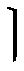 ' avec la consonne ;
la combinaison (255), lorsqu'un glisser linéaire vers la droite est effectué dans la région droite, d'une voyelle ' 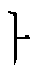 ' avec la consonne ;
la combinaison (255), lorsqu'un glisser linéaire vers la gauche est effectué dans la région droite, d'une voyelle ' 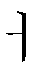 ' avec la consonne ;
la combinaison (255), lorsqu'un glisser linéaire vers la droite est effectué deux fois dans la région droite, d'une voyelle ' 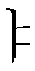 ' avec la consonne ;
la combinaison (255), lorsqu'un glisser linéaire vers la gauche est effectué deux fois dans la région droite, d'une voyelle ' 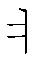 ' avec la consonne ;
la combinaison (257), lorsqu'un glisser semi-ellipsoïdale vers la gauche est effectué dans la région droite, d'une voyelle ' 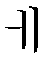 ' avec la consonne ;
la combinaison (257), lorsqu'un glisser semi-ellipsoïdale vers la droite est effectué dans la région droite, d'une voyelle ' 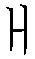 ' avec la consonne ;
la combinaison (259), lorsqu'un glissement linéaire vers la gauche est effectué deux fois et qu'ensuite un toucher est effectué dans la région droite, d'une voyelle ' 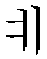 ' avec la consonne ;
et la combinaison (259), lorsqu'un glisser linaire vers la droite est effectué deux fois et qu'ensuite un toucher est effectué dans la région droite, d'une voyelle ' 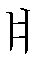 ' avec la consonne.

6. Procédé selon la revendication 5, comprenant en outre :
la combinaison (262), lorsqu'un toucher est effectué dans la région inférieure, d'une voyelle ' 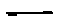 ' avec la consonne ;
la combinaison (264), lorsqu'un glisser linéaire vers le bas est effectué dans la région inférieure, d'une voyelle ' 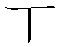 ' avec la consonne ;
la combinaison (264), lorsqu'un glisser linéaire vers le haut est effectué dans la région inférieure, d'une voyelle ' 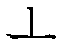 ' avec la consonne ;
lorsqu'un glisser linéaire vers le bas est effectué deux fois dans la région inférieure, la combinaison (264) d'une voyelle ' 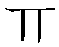 ' avec la consonne ;
et lorsqu'un glisser linéaire vers le haut est effectué deux fois dans la région inférieure, la combinaison (264) d'une voyelle ' 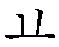 ' avec la consonne.

7. Procédé selon la revendication 5, comprenant en outre :
la combinaison (272), lorsqu'un toucher est effectué dans la région inférieure et qu'ensuite un toucher est effectué dans la région droite, d'une voyelle ' 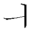 ' avec la consonne ;
la combinaison (274), lorsqu'un glisser linéaire vers le bas est effectué dans la région inférieure et qu'ensuite un glisser linéaire vers la gauche est effectué dans la région droite, d'une voyelle ' 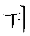 ' avec la consonne ;
la combinaison (274), lorsqu'un glisser linéaire vers le haut est effectué dans la région inférieure et qu'ensuite un glisser semi-ellipsoïdale vers la droite est effectué dans la région droite, d'une voyelle ' 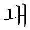 ' avec la consonne ;
la combinaison (274), lorsqu'un glisser linéaire vers le haut est effectué dans la région inférieure et qu'ensuite un glisser linéaire vers la droite est effectué dans la région droite, d'une voyelle ' 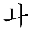 ' avec la consonne ;
la combinaison (276), lorsqu'un glisser linéaire vers le bas est effectué dans la région inférieure et qu'ensuite un toucher est effectué dans la région droite, d'une voyelle ' 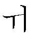 ' avec la consonne ;
la combinaison (276), lorsqu'un glisser linéaire vers le haut est effectué dans la région inférieure et qu'ensuite un toucher est effectué dans la région droite, d'une voyelle ' 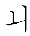 ' avec la consonne ;
et la combinaison (276), lorsqu'un glisser linéaire vers le bas est effectué dans la région inférieure, et qu'ensuite un glisser semi-ellipsoïdale vers la gauche est effectué dans la région droite, d'une voyelle ' 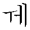 ' avec la consonne.

8. Procédé selon la revendication 1, ladite étape d'affichage d'un caractère combiné comprenant :
la saisie (406) et l'affichage, lorsqu'un glisser linéaire vers la gauche est effectué, d'une voyelle « a » à côté de la consonne ;
la saisie (408) et l'affichage, lorsqu'un glisser linéaire vers la droite est effectué, d'une voyelle « e » à côté de la consonne ;
la saisie et l'affichage, lorsqu'un toucher est effectué, d'une voyelle « i » à côté de la consonne ;
la saisie (412) et l'affichage, lorsqu'un glisser linéaire vers le haut est effectué, d'une voyelle « o » à côté de la consonne ;
et la saisie (414) et l'affichage, lorsqu'un glisser linéaire vers le bas est effectué, d'une voyelle « u » à côté de la consonne.

9. Dispositif permettant de saisir des caractères, comprenant :
une unité à écran tactile (160) dans laquelle de multiples touches sont activées en tant que zone virtuelle pour saisir une voyelle dans un mode de saisies multiples ;
et un dispositif de commande (110) agencé pour :
détecter la saisie d'une touche correspondant à une consonne agencée dans une première région d'un écran tactile parmi de multiples touches agencées sur l'écran tactile ;
détecter un toucher ou un glisser dans une seconde région de l'écran tactile pendant que la saisie de la touche est maintenue ;
commuter en mode de saisies multiples lorsque le toucher ou le glisser est détecté dans une seconde région de l'unité à écran tactile (160) pendant que la saisie de la touche est maintenue, ladite commutation en mode de saisies multiples comprenant :
l'activation d'une région de l'écran tactile, qui est différente de la première région correspondant à la saisie détectée de la touche, en tant que zone virtuelle en vue de la saisie d'une voyelle, et la division de la zone virtuelle en de multiples zones sur la base de la première région correspondant à la saisie détectée de la touche ;
l'identification d'une région correspondant à la seconde zone où le toucher ou le glisser est détecté parmi les multiples zones ;
la combinaison d'une voyelle correspondant au toucher ou au glisser avec la consonne en identifiant la voyelle correspondant au toucher ou au glisser sur la base de la région identifiée ; et l'affichage d'un caractère combiné de la voyelle et de la consonne.

10. Dispositif selon la revendication 9, ladite voyelle étant déterminée selon une forme du glisser dans la zone virtuelle.

11. Dispositif selon la revendication 9, lesdites multiples régions étant divisées visuellement et affichées selon le choix d'un utilisateur.

12. Dispositif selon la revendication 9, ledit dispositif de commande (110) étant agencé pour commander l'affichage de manière transparente de données agencées sur les multiples touches, et pour afficher des voyelles qui sont saisies par un toucher ou un glisser sur les multiples zones comprises dans la zone virtuelle.

13. Dispositif selon la revendication 9, lorsque la zone virtuelle est divisée en une région droite et une région inférieure sur la base de la touche dans laquelle la consonne est agencée, ledit dispositif de commande (110) étant agencé pour commander afin que :
lorsqu'un toucher est effectué dans la région droite, une voyelle ' 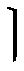 ' soit combinée avec la consonne et la combinaison de la voyelle ' 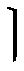 ' avec la consonne soit affichée ;
lorsqu'un glisser linéaire vers la droite est effectué dans la région droite, une voyelle ' 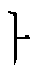 ' soit combinée avec la consonne et un caractère combiné de la voyelle ' 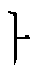 ' avec la consonne soit affiché ;
lorsqu'un glisser linéaire vers la gauche est effectué dans la région droite, une voyelle ' 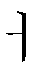 ' soit combinée avec la consonne et un caractère combiné de la voyelle ' 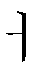 ' avec la consonne soit affiché ;
lorsqu'un glisser linéaire vers la droite est effectué de manière continue deux fois dans la région droite, une voyelle ' 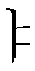 ' soit combinée avec la consonne et un caractère combiné de la voyelle ' 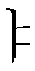 ' avec la consonne soit affiché ;
lorsqu'un glisser linéaire vers la gauche est effectué de manière continue deux fois dans la région droite, une voyelle ' 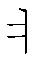 ' soit combinée avec la consonne et un caractère combiné de la voyelle ' 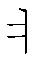 ' avec la consonne soit affiché ;
lorsqu'un glisser semi-ellipsoïdale vers la gauche est effectué dans la région droite, une voyelle ' 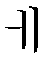 ' soit combinée avec la consonne et un caractère combiné de la voyelle ' 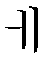 ' avec la consonne soit affiché ;
lorsqu'un glisser semi-ellipsoïdale vers la droite est effectué dans la région droite, une voyelle ' 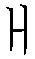 ' soit combinée avec la consonne et un caractère combiné de la voyelle ' 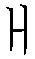 ' avec la consonne soit affiché ;
lorsqu'un glisser linéaire vers la gauche est effectué de manière continue deux fois et qu'ensuite un toucher est effectué dans la région droite, une voyelle ' 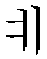 ' soit combinée avec la consonne et un caractère combiné de la voyelle ' 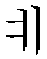 ' avec la consonne soit affiché ;
et lorsqu'un glisser linéaire vers la droite est effectué de manière continue deux fois et qu'ensuite un toucher est effectué dans la région droite, une voyelle ' 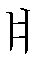 ' soit combinée avec la consonne et un caractère combiné de la voyelle ' 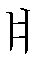 ' avec la consonne soit affiché.

14. Dispositif selon la revendication 13, ledit dispositif de commande (110) étant agencé pour commander afin que :
lorsqu'un toucher est effectué dans la région inférieure, une voyelle ' 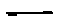 ' soit combinée avec la consonne et un caractère combiné soit affiché ;
lorsqu'un glisser linéaire vers le bas est effectué dans la région inférieure, une voyelle ' 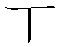 ' soit combinée avec la consonne et la combinaison de la voyelle ' 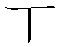 ' avec la consonne soit affichée ;
lorsqu'un glisser linéaire vers le haut est effectué dans la région inférieure, une voyelle ' 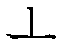 ' soit combinée avec la consonne et la combinaison de la voyelle ' 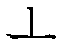 ' avec la consonne soit affichée ;
lorsqu'un glisser linéaire vers le bas est effectué de manière continue deux fois dans la région inférieure, une voyelle ' 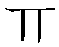 ' soit combinée avec la consonne et la combinaison de la voyelle ' 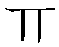 ' avec la consonne soit affichée ;
et lorsqu'un glisser linéaire vers le haut est effectué de manière continue deux fois dans la région inférieure, une voyelle ' 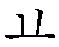 ' soit combinée avec la consonne et la combinaison de la voyelle ' 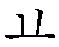 ' avec la consonne soit affichée.

15. Dispositif selon la revendication 13, ledit dispositif de commande (110) étant agencé pour commander afin que :
lorsqu'un toucher est effectué dans la région inférieure et qu'ensuite un toucher est effectué dans la région droite, une voyelle ' 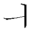 ' soit combinée avec la consonne et la combinaison de la voyelle ' 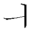 ' avec la consonne soit affichée ;
lorsqu'un glisser linéaire vers le bas est effectué dans la région inférieure et qu'ensuite un glisser linéaire vers la gauche est effectué dans la région droite, une voyelle ' 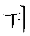 ' soit combinée avec la consonne et la combinaison de la voyelle ' 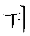 ' avec la consonne soit affichée ;
lorsqu'un glisser linéaire vers le haut es effectué dans la région inférieure et qu'ensuite un glisser semi-ellipsoïdal vers la droite est effectué dans la région droite, une voyelle ' 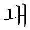 ' soit combinée avec la consonne et la combinaison de la voyelle ' 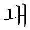 ' avec la consonne soit affichée ;
lorsqu'un glisser linéaire vers le haut est effectué dans la région inférieure et qu'ensuite un glisser linéaire vers la droite est effectué dans la région droite, une voyelle ' 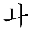 ' soit combinée avec la consonne et la combinaison de la voyelle ' 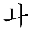 ' avec la consonne soit affichée ;
lorsqu'un glisser linéaire vers le bas est effectué dans la région inférieure et qu'ensuite un toucher est effectué dans la région droite, une voyelle ' 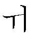 ' soit combinée à la consonne et la combinaison de la voyelle ' 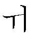 ' avec la consonne soit affichée ;
lorsqu'un glisser droit vers le haut est effectué dans la région inférieure et qu'ensuite un toucher est effectué dans la région droite, une voyelle ' 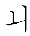 ' soit combinée à la consonne et la combinaison de la voyelle ' 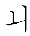 ' avec la consonne soit affichée ;
et lorsqu'un glisser linéaire vers le bas est effectué dans la région inférieure et qu'ensuite un glisser semi-ellipsoïdale vers la gauche est effectué dans la région droite, une voyelle ' 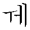 ' soit combinée avec la consonne et la combinaison de la voyelle ' 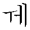 ' avec la consonne soit affichée.

16. Dispositif selon la revendication 9, ledit dispositif de commande (110) étant agencé pour commander afin que :
lorsqu'un glisser linéaire vers la gauche est effectué, une voyelle « a » soit saisie et affichée à côté de la consonne ;
lorsqu'un glisser linéaire vers la droite est effectué, une voyelle « e » soit saisie et affichée à côté de la consonne ;
lorsqu'un toucher est effectué, une voyelle « i » soit saisie et affichée à côté de la consonne ;
lorsqu'un glisser linéaire vers le haut est effectué, une voyelle « o » soit saisie et affichée à côté de la consonne ;
et lorsqu'un glisser linéaire vers le bas est effectué, une voyelle « u » est saisie et affichée à côté de la consonne.
